# EUROPEAN PATENT SPECIFICATION

(11) **EP 2 689 554 B1**
(45) Date of publication and mention of the grant of the patent: **08.08.2018**
(21) Application number: 12740318.6
(22) Date of filing: 28.06.2012
(51) Int. Cl.: H04L 9/08

(54) **METHOD AND SYSTEM FOR OBTAINING A RESULT OF A JOINT PUBLIC FUNCTION FOR A PLURALITY OF PARTIES**
VERFAHREN UND SYSTEM ZUM ABRUFEN DES ERGEBNISSES EINER ÖFFENTLICHEN VERBINDUNGSFUNKTION FÜR MEHRERE PARTEIEN
PROCÉDÉ ET SYSTÈME POUR OBTENIR UN RÉSULTAT D'UNE FONCTION PUBLIQUE DÉPENDANT DE PLUSIEURS VARIABLES POUR UNE PLURALITÉ DE PARTIES

(30) Priority: 28.06.2011 EP 11005237
(43) Date of publication of application: 29.01.2014
(73) Proprietor: NEC Corporation, Minato-ku Tokyo 108-8001 (JP)
(72) Inventor: BOHLI, Jens-Matthias, 69181 Leimen (DE); SEEDORF, Jan, 69124 Heidelberg (DE); LI, Wenting, 69181 Leimen (DE)
(74) Representative: Patent- und Rechtsanwälte Ullrich & Naumann
(86) International application number: PCT/EP2012/062601
(87) International publication number: WO 2013/001021

(56) References cited:
- WO-A2-2009/014735
- US-A1- 2004 179 686
- US-A1- 2010 037 055

## Description

The present invention relates to a method for obtaining a result of a joint public function for a plurality of parties in a secure multi-party computation environment comprising the steps of
a) Providing input data of the parties,
b) Generating shares from the provided input data,
c) Sharing the generated shares among the parties according to a secret sharing scheme,
d) Performing the joint public function with the shared shares,
e) Generating function shares from the performed public function and sharing the function shares among the parties according to a secret sharing scheme, and
f) Obtaining the result from the shared generated shares.

The invention relates also to a secure multi-party computation system for obtaining a result of a joint public function, preferably for performing a method according to one of the claims 1-8 and/or for a use according to claim 9 or claim 10, comprising a plurality of parties, each having a party entity.

The invention relates also to use of the method.

Secure multi-party computation which is also known as secure computation or multi-party computation enables parties to jointly perform a function over their different inputs. At the same time these different inputs are kept private. Secure multi-party computation enables therefore multiple parties to jointly compute some value based on individually held secret bits of information but do not wish to reveal their private information to one another during the computation. One of the first problems arisen was the so-called millionaire problem: Two millionaires can compute which one is richer but without revealing their net worth. The performed joint function is then a lesser-than function.

One of the application areas of a secure multi-party computation is secure cloud computing. Secure multi-party computation enables to perform computation or processing on encrypted values without the need to reveal their corresponding plaintext values to the entities performing the computation. Therefore since it enables a computation on encrypted data it protects the confidentiality of cloud tenants while at the same time enabling a Cloud Service provider to process the data. This offers further services other than storage services.
Although applicable to joint public functions in general the present invention will be described in the following with regard to secure multi-party primitives respectively basic elementary functions as joint public functions.
Such basic elementary functions are for example addition or multiplication. These basic elementary functions can then be used to compute more complex functions with secure multi-party computation.
In the non-patent literature of Ivan Damgård, Martin Geisler, Mikkel Kroigaard, Jesper Buus Nielsen, "Asynchronous Multiparty Computation: Theory and Implementation", Public Key Cryptography 2009: 160-179, whereby an implementation is available under http://viff.dk/, secure multi-party-computation has been used for example for auctions and distributed evaluation of monitoring data. Further prior art solutions are disclosed in documents: WO 2009/014735 A2, US 2010/0037055 A1 and US 2004/0179686 A1. However one of the disadvantages is that the computational overhead which incurred when using the secure multi-party-computation is high even for most of the basis elementary functions. That means for example that such basic elementary functions cannot be computed or performed in near-real-time. In return computation or performance of more complex functions consisting of different basic elementary functions takes an unacceptably long time for many applications. As an example database operations on large data sets in a secure cloud storage delay results of database queries.

It is therefore an objective of the present invention to provide a method and a system for obtaining a result of a joint public function which do not reduce the level of security in a secure multi-party computation environment.

It is an even further objective of the present invention to provide a method and a system which enable performing at least basic elementary functions in near-real-time.

In accordance with the invention the aforementioned objectives are accomplished by a method of claim 1 and a secure multi-party computation system according to claim 12. The aforementioned objectives are in accordance with the invention further accomplished by a use according to claim 10 and a use according to claim 11.

According to claim 1 the method for obtaining a result of a joint public function for a plurality of parties in a secure multi-party computation environment, comprising the steps of
a) Providing input data of the parties,
b) Generating shares from the provided input data,
c) Sharing the generated shares among the parties according to a secret sharing scheme,
d) Performing the joint public function with the shared shares,
e) Generating function shares from the performed public function and sharing the function shares among the parties according to a secret sharing scheme, and
f) Obtaining the result from the shared generated shares.

According to this claim 1 such a method is characterized by the steps of
g) Recovering an intermediate information of the shared shares, and
h) Using the recovered intermediate information for performing step d).

According to claim 12 the secure multi-party computation system for obtaining a result of a joint public function, preferably for performing a method according to one of the claims 1-8 and/or for a use according to claim 9 or claim 10, comprising a plurality of parties, each having a party entity.

According to this claim 12 such a secure multi-party computation system is characterized by
a centralized entity, preferably a dedicated server connected to the party entities or one of the party entities itself, configured to be operable to recover an intermediate information of shared shares between the parties, and to use the recovered intermediate information for performing the joint public function with the shared shares.

In accordance with the invention the aforementioned objectives are further accomplished by a use of a method according to one of the claims 1-9 for database search in a secure multi-party computation secured storage, preferably a full text search.

In accordance with the invention the aforementioned objectives are further accomplished by a use of a method according to one of the claims 1-9 for determining an intersecting set of at least a subset of sets of data.

According to the invention it has first been recognized that recovering an intermediate information of the shared shares and using the recovered intermediate information makes intermediate results visible to at least some of the parties. These visible results improve the efficiency for performing the joint public function.

According to the invention it has further been first recognized that by recovering the intermediate information of the shared shares a high level of security is provided since the recovered intermediate information does not enable a party which processes the intermediate information to extract or somehow determine plaintext values of the input data of the parties.

According to the invention it is further been first recognized, that in particular performing of basic elementary functions can be sped up significantly.

The term "intermediate information" means in particular in the description, preferably in the claims, information which does not enable a party to draw conclusions with regard to the input data which the parties would like to be kept secret.
Further features, advantages and embodiments are described in the following subclaims. According to a preferred embodiment the method comprises a further step i) of preprocessing the generated shares of step b). One of the advantages of a preprocessing is, that the generated shares from the provided input data are prepared in such a way, that an easy and fast recovering of intermediate information is enabled. Preprocessed shares therefore in particular include information which can be recovered as intermediate information. Further it provides to the party which recovers intermediate information processing information that can be used to speed up computation of the joint public function. A preprocessing of shares may for example include a so-called blinding factor which "blinds" the generated shares by a multiplication of the generated shares with a random integer value. Preprocessing may also include a projection of a generated share to a part of a share, for which a need to keep this part private is reduced but essential for efficiently performing the joint public function.
According to a further preferred embodiment step g) includes extracting plaintext information out of the, preferably preprocessed, shares and step d) is performed with the extracted plaintext information and the, preferably preprocessed, shares. When recovering intermediate information by extracting plaintext information out of the shares, plaintext information must not be further processesed and can be even more efficiently used for performing the joint public function. Further, plaintext information may be used not only for performing the joint public function: Further functions may be processed on different party entities allowing a further evaluation of input data of other parties with the plaintext information.
According to a further preferred embodiment data obtained by the performed public function is postprocessed at least for step f). Postprocessing may be provided as counterpart of the preprocessing which means removing of the blinding factor or addition of the suppressed additional information by the projection. One of the advantages of postprocessing is, that the data may be easily be prepared for obtaining the result of the joint public function and providing it to the parties.

According to a further preferred embodiment the joint public function is a secure multi-party computation elementary function. One of the advantages of the secure multi-party computation elementary function is, that these elementary functions may be performed or computed very fast and with a limited amount of memory usage. A further advantage of basic elementary functions are, that they may be used to form more complex functions based on different elementary functions. Thus, complex functions comprising basic elementary functions can also be computed or performed in a very efficient way.

According to a further preferred embodiment the secure multi-party computation elementary function provide equal-comparison, less-than-comparison and/or exponentiation. When elementary functions provide equal-comparison, less-than-comparison and/or exponentiation a very fast computation in near-real-time, in particular in real-time may be provided when computing the secure multi-party computation elementary function.

According to a further preferred embodiment step g) and h) are performed by a centralized entity, preferably a dedicated server or an entity of a party of the secure multi-party computation environment. One of the advantages of a centralized entity is, that such a centralized entity may recover parts of the information and evaluate it very efficiently. Further the centralized entity may perform the joint public function, generate corresponding shares of the result and distributes them back to the different parties. Therefore data traffic is reduced, since sharing is performed more efficiently reducing the data traffic in the secure multi-party computation system. One of the further advantages is, that when using a centralized entity in form of a dedicated server it is avoided that one of the parties obtains additional knowledge by recovering the intermediate information.

Thus, all parties have the same knowledge level when using a centralized entity in form of a dedicated server.

According to a further preferred embodiment step i) includes generating jointly shares of a random value by the parties. This provides a simple blinding-factor for the preprocessing with limited effort.

According to a further preferred embodiment further shares are generated from generated shares in step b) and/or step e), preferably in combination with shares of random values. When further shares are generated from already generated shares further functions may be performed, enhancing flexibility of the method.

According to a preferred embodiment of the secure multi-party computation system according to claim 12 the centralized entity is configured to be operable to generate function shares from the public function and sharing the function shares among the parties according to a secret sharing scheme. This enhances the performance, since the centralized entity also performs the joint public function. Further data traffic in the secure multi-party computation system is reduced, since the centralized entity delivers the function shares to the different parties avoiding that every party shares every share with every other party.

According to a further preferred embodiment at least one of the party entities is configured to be operable to perform preprocessing and/or postprocessing. One of the advantages of a preprocessing is, that the generated shares from the provided input data are prepared in such a way, that an easy and fast recovering of intermediate information is enabled. Preprocessed shares therefore in particular include information which can be recovered as intermediate information. A preprocessing of shares may for example include a so-called blinding factor which "blinds" the generated shares by a multiplication of the generated shares with a random integer value. Preprocessing may also include a projection of a generated share to a part of a share, for which a need to keep this part private is reduced but essential for efficiently performing the joint public function. Postprocessing may be provided as counterpart of the preprocessing which means removing of the blinding factor or addition of the suppressed additional information by the projection. One of the advantages of postprocessing is, that the data may be easily be prepared for obtaining the result of the joint public function and providing to the parties. If the party entities perform pre- and/or postprocessing no further data exchange between the parties is necessary thus reducing network traffic.

There are several ways how to design and further develop the teaching of the present invention in an advantageous way. To this end it is to be referred to the patent claims subordinate to claim 1 and 12 on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will we explained. In the drawings
- Fig. 1: shows a conventional secure multi-party computation system;
- Fig. 2: shows a secure multi-party computation system according to an embodiment of the present invention; and
- Fig. 3: shows a flowchart according to a further embodiment of the present invention.

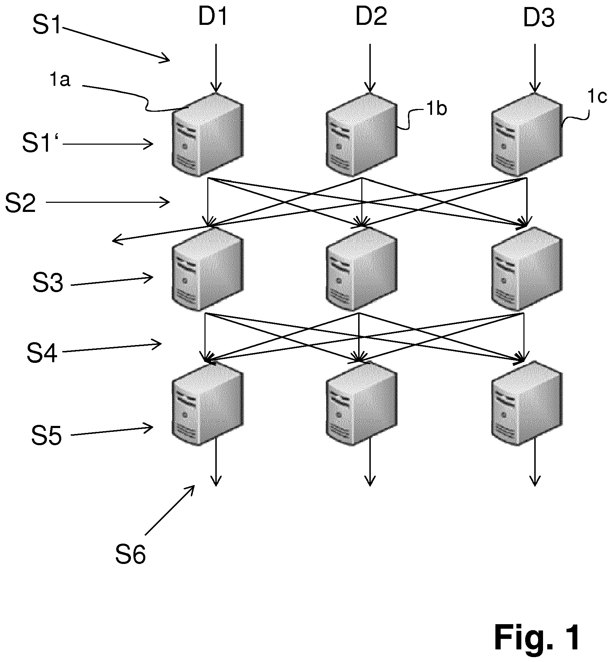

Fig. 1 shows a conventional secure multi-party computation system.

In Fig. 1 input data D1, D2, D3 is provided to party entities 1a, 1b, 1c in a first step S1. Each party then generates shares from the provided input data D1, D2, D3 in a step S1' In a second step S2 the generated shares are shared among the party entities 1a, 1b, 1c according to a secret sharing scheme. Then a third step S3 each party entity 1a, 1b, 1c performs the public function with the shared shares. In a fourth step S4 function shares are generated from their results of the performed joint public function and the function shares are shared among the party entities 1a, 1b, 1c according to a secret sharing scheme. In a fifth step S5 the result from the shared generated shares is obtained and in a sixth step S6 the result is outputted to the different users or parties of the party entities 1a, 1b, 1c.
In summary the participating parties represented by the party entities 1a, 1b, 1c compute the joint public function locally on each single share and redistribute the results as new shares. No information during the steps S1 to S6 is disclosed.

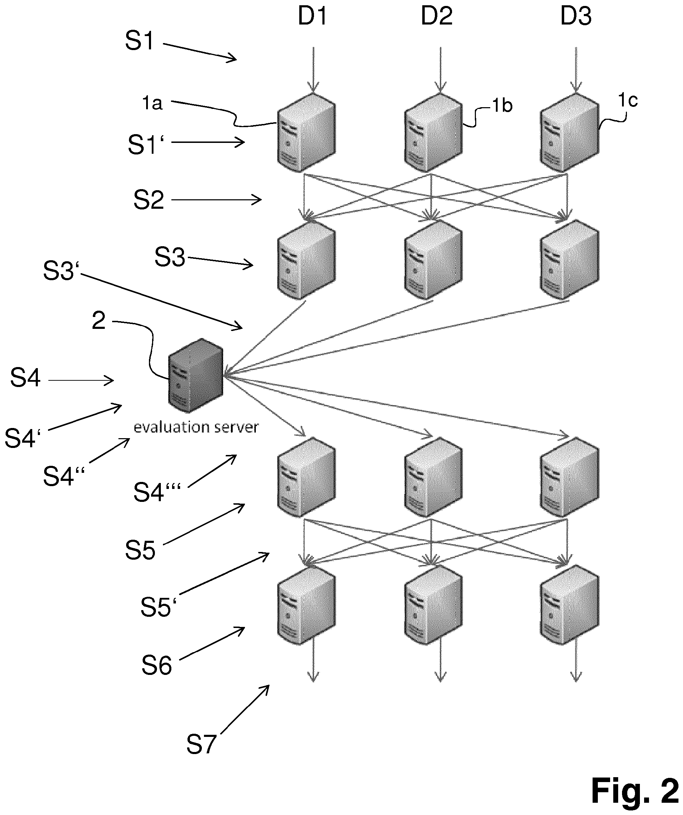

Fig. 2 shows a secure multi-party computation system according to an embodiment of the present invention.
In Fig. 2 in a first step S1 input data D1, D2, D3 is provided to the party entities 1a, 1b and 1c. From the provided input data D1, D2, D3 shares are generated in a further step S1'. These generated shares are distributed in a second step S2 to corresponding other party entities 1a, 1b, 1c. In a third step S3 the party entities 1a, 1b, 1c compute shares based the generated shares from the input data D1, D2, D3. In a further step S3' the generated shares are sent to an evaluation server 2. In a fourth step S4 the evaluation server 2 recovers intermediate information of the received shares when being in possession of enough shares for recovering. In a further step S4' the evaluation server 2 uses now the recovered intermediate information and performs (S4") with that intermediate information the joint public function with the received shares. In a further step S4'" the evaluation server 2 generates function shares from the performed public function and shares the generated functions shares in a further step S4"" among the party entities 1a, 1b, 1c according to a secret sharing scheme. In a fifth step S5 optional postprocessing by the party entities 1a, 1b, 1c is provided to obtain shares of the result of the performed public function. In this case these shares are shared in a further step S5' among the party entities 1a, 1b, 1c and each party entity 1a, 1b, 1c obtains the results from the shares in a sixth step S6. In a seventh step S7 the result is outputted to the parties or users of the party entities 1a, 1b, 1c.

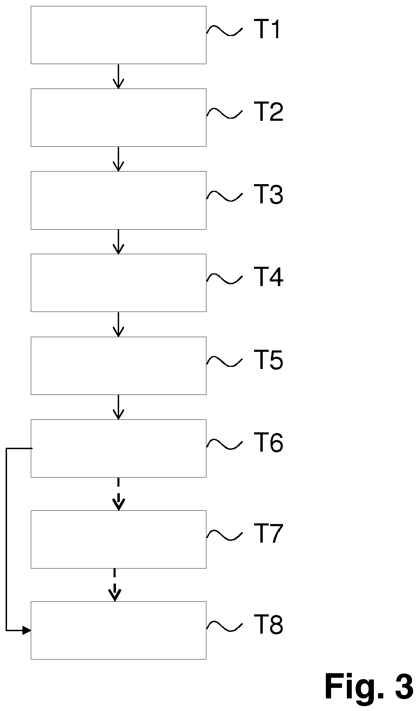

Fig. 3 shows a flowchart according to a further embodiment of the present invention.

In Fig. 3 a flowchart for performing an equal-comparison in form of an equal function a basic elementary function is shown. For two values a and b the EQUAL function will be computed. The result will be "1" if a and b are equal and in "0" all other cases. Further there are an n parties involved for a multi-party computation of the equal function EQUAL. The two values a and b are shared among the n parties, i.e. for each value a and b, n shares of a secret sharing scheme exist. In the following the shares of a are denoted by a₁,...., aₙ and accordingly the shares of b are denoted by b₁,..., bₙ. Party i holds the two shares aᵢ and bᵢ.

First of all the parties perform a preprocessing to minimize the amount of information leaking to an evaluation server 2. In a first step T1 the parties generate jointly shares r₁,..., rₙ of a random value r so that party i holds share rᵢ. This generation is performed locally on the different party entities and the result of the local computation is then shared among all a parties.

In a second step T2 the parties generate shares c₁,..., cₙ of c = r * (a-b). This generation is also performed locally on each of the party entities. The results, i.e. the generated shares c₁,..., cₙ are then distributed among all other n parties, c is a uniformly distributed random value if a is not equal to b and "0" if a is equal to b. Therefore c contains or carries no more information than a = b.

In a third step T3 all parties send their generated share cᵢ of c to the evaluation server 2. Then the evaluation server 2 reconstructs or extracts c in plaintext. The evaluation server have been in pocession of enough shares for this reconstruction.

In a fourth step T4 the evaluation server 2 generates a new variable d and sets d = 1 if c = 0 and d = 0 if c is not equal to 0. d is therefore provided as d = EQUAL (a, b). In a fifth step T5 the server 2 generates shares of d, denoted by d₁,..., dₙ.

In a sixth step T6 the evaluation server 2 distributes the generated shares d₁,... dₙ of d back to the n parties. If necessary in a seventh step T7 post computation maybe performed. However no post-computation is necessary for the function EQUAL, because d is already the result of EQUAL (a, b). In an eighth step T8 the result of the performed joint public function EQUAL is then outputted to the different parties.

In summary the present invention improves the efficiency of secure multi-party computation by making intermediate results or information visible to some parties. The present invention provides a significant speedup of a computation of a joint public function in a secure multi-party computation environment by dedicated information disclosure of intermediate shares to a single entity.

Further the present invention provides an evaluation server which receives shares, recovers data, evaluates the recovered data and computes and distributes shares of the result. In particular for a joint public function EQUAL (a, b) the evaluation server receives shares of a value c = r * (a - b) for a random number r. The evaluation server checks for c = 0 and distributes shares of the result. The result matches the result of the function EQUAL (a, b).

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for obtaining a result of a joint public function for a plurality of parties (1a, 1b, 1c) in a secure multi-party computation environment, comprising the steps of
a) Providing (S1) input data (D1, D2, D3) to the parties,
b) Generating (S1') shares from the provided input data (D1, D2, D3),
c) Sharing (S2) the generated shares among the parties (1a, 1b, 1c) according to a secret sharing scheme,
d) Performing (S4") the joint public function with the shared shares,
e) Generating (S4'") function shares from the performed joint public function and sharing (S4"") the function shares among the parties (1a, 1b, 1c) according to a secret sharing scheme, and
f) Obtaining (S6) the result from the shared generated shares, whereby the steps g)-h) are performed prior to step d):
g) Recovering (S4) an intermediate information of the shared shares by an evaluation server, the intermediate information being information which does not enable the evaluation server to draw conclusions about the input data but being visible to the evaluation server, and
h) Using (S4') the recovered intermediate information for performing step d).

2. The method according to claim 1, **characterized by** the further step i) of preprocessing the generated shares of step b) (S3).

3. The method according to one of the claims 1-2, **characterized in that** step g) includes extracting plaintext information out of the, preferably preprocessed, shares and that step d) is performed with the extracted plaintext information and the, preferably preprocessed, shares.

4. The method according to one of the claims 1-3, **characterized in that** data obtained by the performed public function is postprocessed (S5) at least for step f).

5. The method according to one of the claims 1-4, **characterized in that** the joint public function is a secure multi-party computation elementary function.

6. The method according to claim 5, **characterized in that** the secure multi-party computation elementary function provides equal-comparison, less-than-comparison and/or exponentiation.

7. The method according to one of the claims 1-6, **characterized in that** step g) and step h) are performed by a centralized entity (2), preferably a dedicated server or an entity (1a, 1b, 1c) of a party of the secure multi party computation environment.

8. The method according to claim 2, **characterized in that** step i) includes generating jointly shares of a random value by the parties.

9. The method according to one of the claims 1-8, **characterized in that** further shares are generated from generated shares in step b) and/or step e), preferably in combination with shares of random values.

10. Use of a method according to one of the claims 1-9 for database search in a secure multi party computation secured storage, preferably a full text search.

11. Use of a method according to one of the claims 1-9 for determining an intersecting set of at least a subset of sets of data.

12. Secure multi party computation system for obtaining a result of a joint public function for performing a method according to one of the claims 1-8 and/or for a use according to claim 9 or claim 10, comprising a plurality of parties, each having a party entity (1a, 1b, 1c), wherein: a centralized entity (2), preferably a dedicated server connected to the party entities (1a, 1b, 1c) or one of the party entities (1a, 1b, 10) itself, configured to be operable to recover an intermediate information of shared shares prior to performing a joint public function wherein the intermediate information being information which does not enable the centralized entity to draw conclusions about the input data but being visible to the centralized entity, and to use the recovered intermediate information for performing said joint public function with the shared shares.

13. Secure multi-party computation system according to claim 12, **characterized in that** the centralized entity (2) is configured to be operable to generate function shares from the performed public function and sharing the function shares among the parties according to a secret sharing scheme.

14. Secure multi-party computation system according to claim 12, **characterized in that** at least one of the party entities (1a, 1b, 1c) is configured to be operable to perform preprocessing and/or postprocessing.

## Patentansprüche

1. Ein Verfahren zum Erhalten eines Resultats einer gemeinsamen öffentlichen Funktion für eine Mehrzahl von Parteien (1a, 1b, 1c) in einer sicheren Mehrparteienberechnungsumgebung, umfassend die Schritte
a) Bereitstellen (S1) von Eingabedaten (D1, D2, D3) für die Parteien,
b) Erzeugen (S1') von Teilen von den bereitgestellten Eingabedaten (D1, D2, D3),
c) Teilen (S2) der erzeugten Teile mit den Parteien (1a, 1b, 1c) gemäß einem geheimen Teilungsschema,
d) Ausführen (S4") der gemeinsamen öffentlichen Funktion mit den geteilten Teilen,
e) Erzeugen (S4'") von Funktionsteilen von der durchgeführten gemeinsamen öffentlichen Funktion und Verteilen (S4"") der Funktionsteile unter den Parteien (1a, 1b, 1c) gemäß einem geheimen Teilungsschema, und
f) Erhalten (S6) des Ergebnisses von den geteilten erzeugten Teilen, wobei die Schritte g) bis h) vor dem Schritt d) durchgeführt werden:
g) Rückgewinnen (S4) von Zwischeninformationen von den geteilten Teilen durch einen Auswerteserver, wobei die Zwischeninformationen Informationen sind, die den Auswertungsserver nicht in die Lage versetzen Schlussfolgerungen über die Eingabedaten zu ziehen, die aber für den Auswerteserver sichtbar sind und
h) Benutzen (S4') der rückgewonnenen Zwischeninformationen zur Durchführung von Schritt d).

2. Das Verfahren gemäß Anspruch 1, **gekennzeichnet durch** den weiteren Schritt i) des Vorverarbeitens der erzeugten Teile von Schritt b) (S3).

3. Das Verfahren gemäß einen der Ansprüche 1-2, **dadurch gekennzeichnet, dass** Schritt g) ein Entnehmen von Klartextinformationen aus den, vorzugsweise vorverarbeiteten, Teilen umfasst und dass Schritt d) mit den entnommenen Klartextinformationen und den, vorzugsweise vorverarbeiteten, Teilen durchgeführt wird.

4. Das Verfahren gemäß einem der Ansprüche 1-3, **dadurch gekennzeichnet, dass** Daten, die durch die durchgeführte öffentliche Funktion erhalten werden, nachbearbeitet werden (S5) zumindest für Schritt f).

5. Das Verfahren gemäß einem der Ansprüche 1-4, **dadurch gekennzeichnet, dass** die gemeinsame öffentliche Funktion eine sichere Mehrparteienberechnungselementarfunktion ist.

6. Das Verfahren gemäß Anspruch 5, **dadurch gekennzeichnet, dass** die sichere Mehrparteienberechnungselementarfunktion und einen Gleich-Vergleich, Weniger-als-Vergleich und/oder eine Potenzierung bereitstellt.

7. Das Verfahren gemäß einem der Ansprüche 1-6, **dadurch gekennzeichnet, dass** Schritt g) und Schritt h) durch eine zentrale Entität (2) durchgeführt werden, vorzugsweise einen bestimmten Server oder eine Entität (1a, 1b, 1c) von einer Partei der sicheren Mehrparteienberechnungsumgebung.

8. Das Verfahren gemäß Anspruch 2, **dadurch gekennzeichnet, dass** Schritt i) ein gemeinsames Erzeugen von Teilen eines Zufallswerts durch die Parteien umfasst.

9. Das Verfahren gemäß einem der Ansprüche 1-8, **dadurch gekennzeichnet, dass** weitere Teile erzeugt werden von den erzeugten Teilen in Schritt b) und/oder Schritt e), vorzugsweise in Kombination mit Teilen von Zufallswerten.

10. Verwendung eines Verfahrens gemäß einem der Ansprüche 1-9 für eine Datenbanksuche in einem mit einem sicheren Mehrparteienberechnungsverfahren gesicherten Speicher, vorzugsweise eine Volltextsuche.

11. Verwendung eines Verfahrens mit einem der Ansprüche 1-9 zur Bestimmung einer Schnittmenge von zumindest einer Teilmenge von Datenmengen.

12. Ein sicheres Mehrparteienberechnungssystem zum Erhalten eines Resultats einer gemeinsamen öffentlichen Funktion zur Durchführung eines Verfahrens gemäß einen der Ansprüche 1-8 und/oder für eine Verwendung gemäß Anspruch 9 oder Anspruch 10 umfassend
eine Mehrzahl von Parteien, wobei jede Partei eine Parteientität (1a, 1b, 1c) umfasst, wobei
eine Zentralentität (2), vorzugsweise ein bestimmter Server, der mit den Parteientitäten (1a, 1b, 1c) verbunden ist oder eine der Parteien (1a, 1b, 10) selber, ausgebildet zur Rückgewinnung von Zwischeninformationen von geteilten Teilen vor Durchführung einer gemeinsamen öffentlichen Funktion, wobei die Zwischeninformationen Informationen sind, die den Auswertungsserver nicht in die Lage versetzen, Schlussfolgerungen über die Eingabedaten zu ziehen, die aber für den Auswerteserver sichtbar sind und zur Benutzung der rückgewonnenen Zwischeninformationen zur Durchführung besagter gemeinsamer öffentlicher Funktion mit den geteilten Teilen.

13. Sicheres Mehrparteienberechnungssystem gemäß Anspruch 12, **dadurch gekennzeichnet, dass** die Zentralentität (2) ausgebildet ist, um Funktionsteile von der durchgeführten öffentlichen Funktion zu erzeugen und zum Teilen der Funktionsteile unter den Parteien gemäß einem geheimen Teilungsschema.

14. Sicheres Mehrparteienberechnungssystem gemäß Anspruch 12, **dadurch gekennzeichnet, dass** zumindest eine der Parteientitäten (1a, 1b, 1c) ausgebildet ist, um ein Vorverarbeiten und/oder eine Nachbearbeitung durchzuführen.

## Revendications

1. Procédé d'obtention d'un résultat d'une fonction publique conjointe pour une pluralité de tiers (1a, 1b, 1c) dans un environnement de calcul multitiers sécurisé, comprenant les étapes :
a) fourniture (S1) d'une entrée de données (D1, D2, D3) aux tiers,
b) génération (S1') de parts à partir des données d'entrée fournies (D1, D2, D3),
c) partage (S2) des parts générées entre les tiers (1a, 1b, 1c) selon un schéma de partage secret,
d) réalisation (S4'') de la fonction publique conjointe avec les parts partagées,
e) génération (S4''') de parts de fonction à partir de la fonction publique conjointe réalisée et partage (S4'''') des parts de fonction entre les tiers (1a, 1b, 1c) selon un schéma de partage secret, et
f) obtention (S6) du résultat à partir des parts générées partagées,
moyennant quoi les étapes g) à h) sont réalisées avant l'étape d) :
g) récupération (S4) d'une information intermédiaire des parts partagées par un serveur d'évaluation, l'information intermédiaire étant une information qui ne permet pas au serveur d'évaluation de tirer des conclusions à propos des données d'entrée mais qui est visible par le serveur d'évaluation, et
h) utilisation (S4') de l'information intermédiaire récupérée pour réaliser l'étape d).

2. Procédé selon la revendication 1, **caractérisé par** l'étape supplémentaire i) de prétraitement des parts générées de l'étape b) (S3).

3. Procédé selon l'une des revendications 1 ou 2, **caractérisé en ce que** l'étape g) comprend l'extraction d'une information de texte en clair parmi les parts, de préférence prétraitées, et **en ce que** l'étape d) est réalisée avec l'information de texte en clair extraite et les parts, de préférence prétraitées.

4. Procédé selon l'une des revendications 1 à 3, **caractérisé en ce que** les données obtenues par la fonction publique réalisée sont post-traitées (S5) au moins pendant l'étape f).

5. Procédé selon l'une des revendications 1 à 4, **caractérisé en ce que** la fonction publique conjointe est une fonction élémentaire de calcul multitiers sécurisé.

6. Procédé selon la revendication 5, **caractérisé en ce que** la fonction élémentaire de calcul multitiers sécurisé assure une comparaison égale, une comparaison inférieure à et/ou une exponentiation.

7. Procédé selon l'une des revendications 1 à 6, **caractérisé en ce que** l'étape g) et l'étape h) sont réalisées par une entité centralisée (2), de préférence un serveur dédié ou une entité (1a, 1b, 1c) d'un tiers de l'environnement de calcul multitiers sécurisé.

8. Procédé selon la revendication 2, **caractérisé en ce que** l'étape i) comporte la génération conjointe de parts d'une valeur aléatoire par les tiers.

9. Procédé selon l'une des revendications 1 à 8, **caractérisé en ce qu'**en outre des parts sont générées à partir de parts générées à l'étape b) et/ou l'étape e), de préférence en combinaison avec des parts de valeurs aléatoires.

10. Utilisation d'un procédé selon l'une des revendications 1 à 9, pour une recherche en base de données dans une mémoire sécurisée de calcul multitiers sécurisé, de préférence une recherche en texte intégral.

11. Utilisation d'un procédé selon l'une des revendications 1 à 9, pour la détermination d'un ensemble d'intersection d'au moins un sous-ensemble d'ensembles de données.

12. Système de calcul multitiers sécurisé pour obtenir un résultat d'une fonction publique conjointe pour réaliser un procédé selon l'une des revendications 1 à 8 et/ou pour une utilisation selon la revendication 9 ou la revendication 10, comprenant
une pluralité de tiers, chacun ayant au moins une entité de tiers (1a, 1b, 1c),
dans lequel :
une entité centralisée (2), de préférence un serveur dédié connecté aux entités de tiers (1a, 1b, 1c) ou l'une des entités de tiers (1a, 1b, 10) elle-même, configurée pour être opérationnelle pour récupérer une information intermédiaire de parts partagées avant réalisation d'une fonction publique conjointe, dans lequel l'information intermédiaire est une information qui ne permet pas à l'entité centralisée de tirer des conclusions à propos des données d'entrée mais qui est visible par l'entité centralisée, et pour utiliser l'information intermédiaire récupérée afin de réaliser ladite fonction publique conjointe avec les parts partagées.

13. Système de calcul multitiers sécurisé selon la revendication 12, **caractérisé en ce que** l'entité centralisée (2) est configurée pour être opérationnelle pour générer des parts de fonction à partir de la fonction publique réalisée et partager les parts de fonction entre les tiers selon un schéma de partage secret.

14. Système de calcul multitiers sécurisé selon la revendication 12, **caractérisé en ce qu'**au moins l'une des entités de tiers (1a, 1b, 1c) est configurée pour être opérationnelle pour réaliser un prétraitement et/ou un post-traitement.
